(19) Europäisches Patentamt
European Patent Office
Office européen des brevets

(11) **EP 2 445 296 A1**

(12) **EUROPEAN PATENT APPLICATION**
published in accordance with Art. 153(4) EPC

(43) Date of publication:
**25.04.2012 Bulletin 2012/17**

(51) Int Cl.:
*H04W 72/12* (2009.01)   *H04W 52/08* (2009.01)
*H04W 72/14* (2009.01)

(21) Application number: **10789576.5**

(22) Date of filing: **18.06.2010**

(86) International application number:
**PCT/JP2010/060340**

(87) International publication number:
**WO 2010/147203 (23.12.2010 Gazette 2010/51)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **18.06.2009 JP 2009145267**

(71) Applicant: **NTT DOCOMO, INC.**
**Chiyoda-ku**
**Tokyo 100-6150 (JP)**

(72) Inventors:
• **YAJIMA, Tatsuro**
 **Tokyo 100-6150 (JP)**
• **HANAKI, Akihito**
 **Tokyo 100-6150 (JP)**
• **OYANE, Hidehiko**
 **Tokyo 100-6150 (JP)**

(74) Representative: **HOFFMANN EITLE**
**Patent- und Rechtsanwälte**
**Arabellastraße 4**
**81925 München (DE)**

(54) **RADIO BASE STATION**

(57)     A radio base station NodeB according to the present invention is configured, in EUL communication in "Time and Rate" system, to determine an SG to be notified to the mobile station scheduled in a next scheduling slot, based on maximum allowable reception power in the radio base station NodeB at a time of determining the SG to be notified to the mobile station scheduled in the next scheduling slot, and based on a DPCCH SIR target corresponding to respective SGs.

FIG. 8

**Description**

TECHNICAL FIELD

The present invention relates to a radio base station.

BACKGROUND ART

The 3GPP defines a high-speed uplink communication referred to as "EUL (Enhanced Uplink) or "HSUPA (High-Speed Uplink Packet Access)".
In the EUL communication, a mobile station UE is configured to transmit a data signal (MAC-e PDU) to a radio base station NodeB via a high-speed uplink communication data channel (E-DPDCH: Enhanced-Dedicated Physical Data Channel) .
Specifically, in the EUL communication, the radio base station NodeB is configured to determine a mobile station UE to be scheduled in each time slot (TTI: Transmission Time Interval) and transmit a scheduling grant (AG: Absolute Grant, RG: Relative Grant) to the mobile station UE to be scheduled.
Meanwhile, the mobile station UE to be scheduled in each time slot is configured to transmit a MAC-e PDU with TBS (Transport Block Size) in accordance with the scheduling grant (AG) received via the E-DPDCH from the radio base station NodeB.
Here, the mobile station UE to be scheduled in each time slot is configured to transmit a MAC-e PDU via the E-DPDCH with transmission power (transmission amplitude) determined in accordance with the AG based on a "transmission power ratio (or transmission amplitude ratio) between the E-DPDCH and general uplink communication dedicated control channel (DPCCH: Dedicated Physical Control Channel)."
In addition, the EUL communication in the "Time and Rate" system is configured to treat only one mobile station UE as a mobile station UE to be scheduled in each scheduling allocation slot.

PRIOR ART DOCUMENT

NON-PATENT DOCUMENT

Non-patent document 1: 3GPP TS25.309 V6.5.0, Dec. 2005

SUMMARY OF THE INVENTION

PROBLEM TO BE SOLVED BY THE INVENTION

However, the EUL communication in the "Time and Rate" system has a problem that it is not determined yet what scheduling grant (AG) the radio base station NodeB should transmit at the time of switching between mobile stations UEs to be scheduled.
For this reason, the present invention has been made in view of the foregoing problem. Accordingly an objective of the invention is to provide a radio base station capable of notifying a proper scheduling grant to a mobile station UE to be scheduled in the next scheduling allocation slot at the time of switching between mobile stations UEs to be scheduled in EUL communication in "Time and Rate" system.
The first feature of the present invention is summarized as a radio base station, including: a scheduling unit configured to determine one mobile station as a mobile station scheduled in each scheduling slot, and determine a scheduling grant to be notified to the scheduled mobile station; a scheduling grant transmission unit configured to transmit a first scheduling grant determined by the scheduling unit to a first mobile station scheduled in a next scheduling slot and transmit a second scheduling grant making an instruction to stop transmission of uplink data in the next scheduling slot to a second mobile station scheduled in a current scheduling slot, at the time of switching between mobile stations scheduled; a target reception quality management unit configured to manage a target reception quality in a dedicated physical control channel for each scheduling grant; and a calculation unit configured to calculate a required reception quality in the dedicated physical control channel, which is required to satisfy the target reception quality in the dedicated physical control channel for each scheduling grant, wherein the scheduling unit is configured to determine the first scheduling grant based on maximum allowable reception power in the radio base station at a time of determining the first scheduling grant, and based on the required reception quality in the dedicated physical control channel for each scheduling grant.

EFFECTS OF THE INVENTION

As described above, the present invention provides a radio base station capable of notifying a proper scheduling grant to a mobile station UE to be scheduled in the next scheduling allocation slot at the time of switching between the mobile stations UE to be scheduled in EUL communication in "Time and Rate" system.

BRIEF DESCRIPTION OF THE DRAWINGS

[Fig. 1] Fig. 1 is an entire configuration diagram of a mobile communication system according to a first embodiment of the invention.
[Fig. 2] Fig. 2 is a functional block diagram of a radio base station according to the first embodiment of the invention.
[Fig. 3] Fig. 3 is a table showing one example of management items of an SIR target management unit in the radio base station according to the first embodiment of the invention.
[Fig. 4] Fig. 4 is a drawing showing one example of a method of determining an SIR target, the method used in the radio base station according to the first embodiment of the invention.
[Fig. 5] Fig. 5 is a drawing showing a method of determining an SG in the radio base station according to the first embodiment of the invention.
[Fig. 6] Fig. 6 is a drawing showing a method of determining an SG in the radio base station according to the first embodiment of the invention.
[Fig. 7] Fig. 7 is a flowchart showing an operation of the radio base station according to the first embodiment of the invention.
[Fig. 8] Fig. 8 is a drawing for illustrating a problem of a conventional radio base station.
[Fig. 9] Fig. 9 is a drawing for illustrating a problem of a conventional radio base station.

MODE FOR CARRYING OUT THE INVENTION

(Configuration of a mobile communication system according to a first embodiment of the invention)

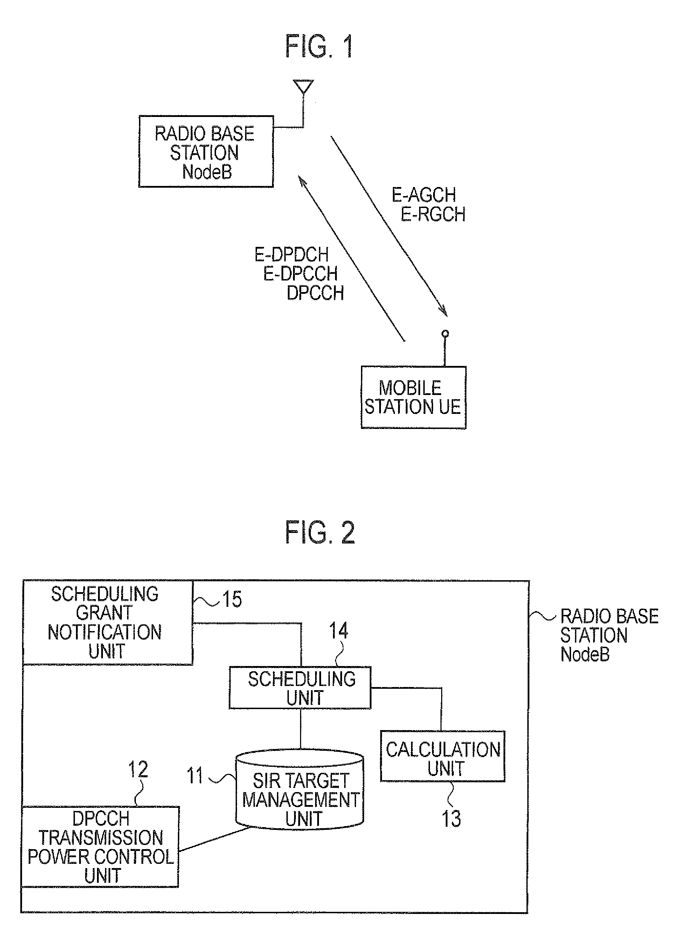

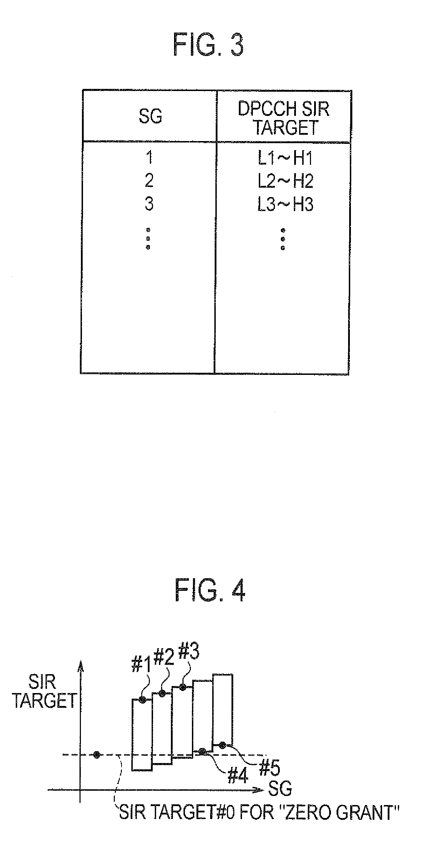

Referring to Figs. 1 to 6, the configuration of a mobile communication system according to a first embodiment of the invention is described.
As shown in Fig. 1, the mobile communication system according to the embodiment is configured to provide a radio base station NodeB and a mobile station UE with EUL communication in "Time and Rate" system.
Specifically, the mobile communication system according to the embodiment is capable of establishing downlink channels such as an absolute grant channel (E-AGCH: E-DCH Absolute Grant Chancel), and a relative grant channel (E-RGCH: E-DCH Relative Grant Channel), and uplink channels such as a high-speed uplink communication data channel (E-DPDCH: E-DCH Dedicated Physical Data Channel), a high-speed uplink communication control channel (E-DPCCH: E-DCH Dedicated Physical Control Channel), and an uplink control channel (DPCCH: Dedicated Physical Control Channel), between the radio base station NodeB and the mobile station UE.
Here, the mobile station UE is configured to determine a transmission power ratio between E-DPDCH and DPCCH based on AG (Absolute Grant) transmitted by the radio base station NodeB via E-AGCH, or RG (Relative Grant) transmitted by the radio base station NodeB via E-RGCH, and to determine transmission power in the E-DPDCH based on the transmission power ratio.
As shown in Fig. 2, the radio base station NodeB includes an SIR target management unit 11, a DPCCH transmission power control unit 12, a calculation unit 13, a scheduling unit 14, and a scheduling grant transmission unit 15.
The SIR target management unit 11 is configured to manage a DPCCH SIR target (a target reception quality in a dedicated physical control channel) for each SG (Scheduling Grant).
As shown in Fig. 3, the SIR target management unit 11 is configured to store "SG (or E-AGCH index)" and "a DPCCH SIR target" in association with each other. Here, in the SIR target management unit 11, the "DPCCH SIR target" for each "SG" is set as a value between an upper limit value and a lower limit value.
Also, the SIR target management unit 11 is configured to manage a DPCCH SIR target for "Zero Grant (a second scheduling grant)".
Note that, as shown in Fig. 4, if the lower limit value of the DPCCH SIR target for a specific SG is larger than an SIR target#0 in the DPCCH for the "Zero Grant", the upper limit value of the DPCCH SIR target for the specific SG may be used as the DPCCH SIR target for the specific SG.
For example, the DPCCH SIR targets #1 to #3 for SGs #1 to #3 are set at the upper limit values of the DPCCH. SIR targets #1 to #3 for SGs #1 to #3.

On the other hand, if the lower limit value of the DPCCH SIR target for a specific AG is smaller than the DPCCH SIR target #0 for the "Zero Grant", the lower limit value of the DPCCH SIR target for the specific SG may be used as the DPCCH SIR target for the specific SG.

For example, the DPCCH SIR targets #4 and #5 for SGs #4 and #5 are set at the lower limit values of the DPCCH SIR targets #4 and #5 for SGs #1 to #3.

The DPCCH transmission power control unit 12 is configured to perform transmission power control on the DPCCH in the uplink.

Specifically, the DPCCH transmission power control unit 12 is configured to perform inner-loop transmission power control on the DPCCH for each mobile station UE based on the SIR target for SG assigned to the mobile station UE.

The calculation unit 13 is configured to calculate a required RSSI (Received Signal Strength Indication) in the DPCCH which is needed to satisfy the DPCCH SIR target for each SG.

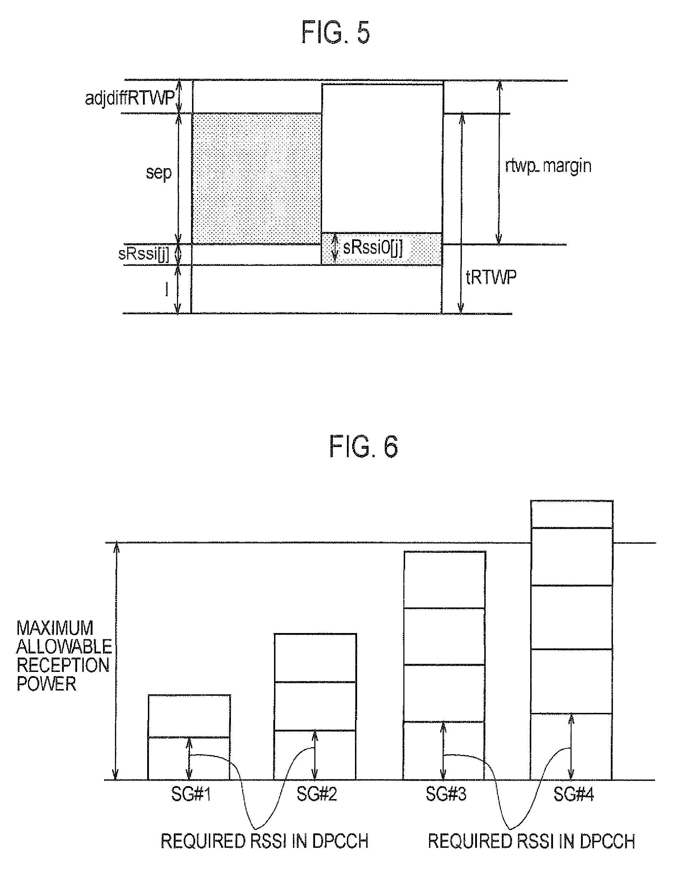

Here, referring to Fig. 5, a method of calculating a required RSSI in the DPCCH for each SG is described. Power shown in Fig. 5 is power at the time of determining SG to be notified to a mobile station UE#j. In addition, Fig. 5 shows the power not in units of dBm but in units of true value for simplicity.

In Fig. 5, "adjdffRTWP" is a margin determined depending on the performance of AGC (Automatic Gain Control) in the radio base station NodeB.

In addition, "sep" is E-DCH power (a sum of transmission power of E-DPCCH and transmission power of E-DPCCH) defined in common in the mobile communication system, "sRssi[j]" is a measured value of RSSI in the DPCCH for the mobile station UE#j to be scheduled in the next scheduling slot, and "sRssi0[j]" is required RSSI in the DPCCH for the mobile station UE#$j to be scheduled in the next scheduling slot.

Moreover, "I" is interference power in the radio base station NodeB, "tRTWP" is transmission/reception power in the radio base station NodeB, and "rtwp_margin" is E-DCH power assignable to the mobile station UE#j to be scheduled in the next scheduling slot.

Specifically, the calculation unit 13 is configured to calculate the required RSSI "sRssi0 [j]" in the DPCCH for each SG for the mobile station UE#j by using (Formula 1):

$$\text{sRssi0[j]} = \text{tSIR[t]} \times \text{I/dpcchSF, or equivalently,}$$

$$\text{sRssi0[j]} = \text{tSIR[t]} \times (\text{tRTWP} - \text{sep} - \text{sRssi[j]})/\text{dpcchSF} \dots$$

$$(\text{Formula 1}),$$

where "tSIR[t]" is the DPCCH SIR target for E-AGCH index [t (integer of 31 or less)] corresponding to SG#t, and "dpcchSF" is a spreading ratio in the DPCCH.

In other words, the calculation unit 13 is configured to calculate the required RSSI in the DPCCH for each SG, based on the interference power "I" in the radio base station NodeB at the time of determining the SG, and also based on the DPCCH SIR target "tSIR[t]" for the SG.

The scheduling unit 14 is configured to determine a mobile station UE to be scheduled and a SG (Scheduling Grant) to be notified to the mobile station UE to be scheduled, in each scheduling slot.

That is, in the case of performing the EUL communication in "Time and Rate" system, in each scheduling slot, the scheduling unit 14 determines one mobile station UE as a mobile station UE to be scheduled and determines a SG to be notified to the mobile station UE to be scheduled.

More specifically, the scheduling unit 14 may be configured to determine SG corresponding to the maximum E-AGCH index "t" which satisfies (Formula 2), as SG to be notified to the mobile station to be scheduled:

$$(\mathrm{TableOfAG}[t] + \beta_{ec}^2) \times \mathrm{sRssi0}[j] < \mathrm{rtwp\_margin} + \mathrm{sRssi}[j] -$$

$$\mathrm{sRssi0}[j], \text{ or equivalently,}$$

$$(\mathrm{TableOfAG}[t] + \beta_{ec}^2 + 1) \times \mathrm{tSIR}[t] \times \mathrm{I/dpcchSF} - \mathrm{sRssi}[j] <$$

$$\mathrm{rtwp\_margin} \ldots (\text{Formula 2}),$$

where "TableOfAG[t]" is a transmission power ratio between E-DPDCH and DPCCH for E-AGCH index "t" corresponding to SG#t, "$\beta_{ec}^2$" is a transmission power ratio between E-DPCCH and DPCCH.

In other words, as shown in Fig. 6, the scheduling unit 14 is configured to determine SG (a first scheduling grant) based on the maximum allowable reception power "rtwp_margin + sRssi[j] - sRssi0[j]" in the radio base station NodeB at the time of determining the SG, and also based on the required RSSI "sRssi0[j]" in the DPCCH for each SG.

In an example of Fig. 6, the scheduling unit 14 is configured to determine SG#3 as SG to be notified to the mobile station to be scheduled.

(Operation of the mobile communication system according to the first embodiment of the invention)

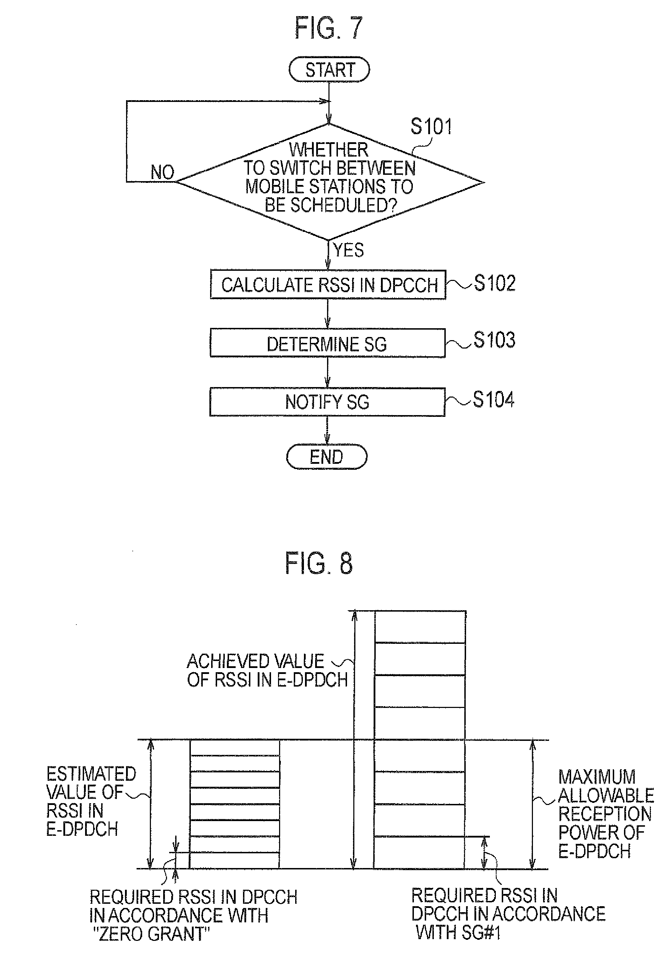

Hereinafter, referring to Fig. 7, description is provided for an operation of the mobile communication system according to the embodiment, specifically, an operation of the radio base station NodeB according to the embodiment.

As shown in Fig. 7, at step S101, the radio base station NodeB determines whether or not to switch to a mobile station UE to be scheduled in the next scheduling slot from a mobile station UE scheduled in the current scheduling slot.

If determining to switch to the mobile station UE to be scheduled in the next scheduling slot, the radio base station NodeB performs an operation at step S102. On the other hand, if determining not to switch to the mobile station UE to be scheduled in the next scheduling slot, the radio base station NodeB repeats the operation of S101.

At step S102, the radio base station NodeB calculates the required RSSI in the DPCCH for each SG as described above.

At step S103, the radio base station NodeB determines SG to be notified to the mobile station UE to be scheduled in the next scheduling slot, based on the required RSSI in the DPCCH for each SG and the maximum allowable reception power in the radio base station NodeB at the current time point (at the time of determining SG) as descried above.

At step S104, the radio base station NodeB transmits AG according to the SG determined at step S103 to the mobile station UE to be scheduled in the next scheduling slot, and transmits "Zero Grant" to the mobile station UE scheduled in the current scheduling slot, via the E-AGCH at a predetermined timing.

(Advantageous effects of the mobile communication system according to the first embodiment of the invention)

By use of the mobile communication system according to the first embodiment of the invention, in the EUL communication in "Time and Rate" system, a proper scheduling grant can be notified to a mobile station UE to be scheduled in the next scheduling allocation slot at the time of switching to the mobile station UE to be scheduled.

In the EUL communication, different DPCCH SIR targets are set in accordance with respective SGs in order to maintain communication quality.

Here, if SG to be notified to the mobile station UE to be scheduled in the next scheduling slot is determined based on the DPCCH SIR target (i.e., the required RSSI in the DPCCH) for the "Zero Grant", the following problem may occur.

As shown in Fig. 8, if the required RSSI (SIR target) in the DPCCH for SG#1 determined as SG to be notified to the mobile station UE to be scheduled in the next scheduling slot is larger than the required RSSI (SIR target) in the DPCCH for the "Zero Grant", the achieved value of the DPCCH SIR (in accordance with the "Zero Grant") is determined to be lower than the DPCCH SIR target (for the SG#1) at the beginning of the next scheduling slot.

As a result, the transmission power in the DPCCH is sharply increased by the inner-loop transmission power control, and accordingly the transmission power in the E-DPDCH is also increased. This may cause a problem that the achieved value of RSSI in the E-DPDCH exceeds the maximum allowable reception power of the E-DPDCH.

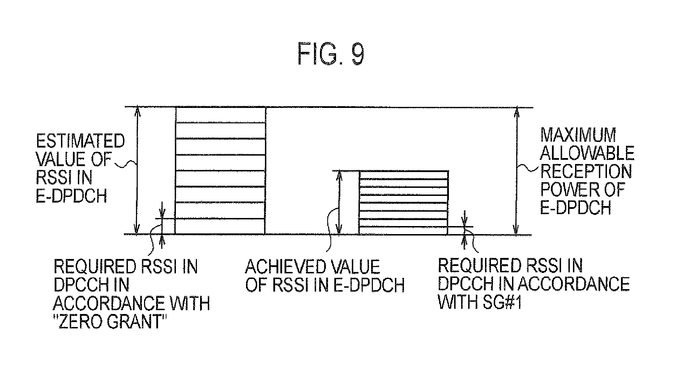

On the other hand, as shown in Fig. 9, if the required RSSI (SIR target) in the DPCCH for the SG#1 determined as SG to be notified to the mobile station UE to be scheduled in the next scheduling slot is smaller than the required RSSI (SIR target) in the DPCCH for the "Zero Grant", the achieved value of the DPCCH SIR (in accordance with the "Zero Grant") is determined to be larger than the DPCCH SIR target (for the SG#l) at the beginning of the next scheduling slot.

As a result, the transmission power in the DPCCH is sharply decreased by the inner-loop transmission power control, and accordingly the transmission power in the E-DPDCH is also decreased. This may cause a problem that the achieved value of RSSI in the E-DPDCH falls under the maximum allowable reception power of the E-DPDCH. Thus, actually assignable SG cannot be assigned, which may cause a problem that resources cannot be effectively utilized.

These problems can be resolved by using the mobile communication system according to the first embodiment of the invention.

The features described above may be expressed as follows.

A first feature of the invention is a radio base station NodeB including: a scheduling unit 14 configured to determine one mobile station UE as a mobile station to be scheduled in each scheduling slot, and determine a SG (scheduling grant) to be notified to the mobile station to be scheduled; a scheduling grant transmission unit 15 configured to transmit the SG (first scheduling grant) determined by the scheduling unit 14 to a first mobile station UE#l to be scheduled in the next scheduling slot at a time of switching between mobile stations to be scheduled, and transmit a "zero Grant (a second scheduling grant)" making an instruction to stop transmission of uplink data (MAC-e PDU) in the next scheduling slot to a second mobile station UE#2 to be scheduled in a current scheduling slot; an SIR target management unit 11 configured to manage a DPCCH SIR target (target reception quality in a dedicated physical control channel) for each SG (scheduling graft); and a calculation unit 13 configured to calculate a required RSSI in the DPCCH (required reception quality in the dedicated physical control channel) which is required to satisfy the DPCCH SIR target for each SG. The scheduling unit 14 is configured to determine the SG (the first scheduling grant) based on maximum allowable reception power in the radio base station NodeB at the time of determining the SG (the first scheduling grant), and based on the required RSSI in the DPCCH for each SG.

In the first feature of the embodiment, the calculation unit 13 may be configured to calculate the required RSSI in the DPCCH for each SG based on interference power in the radio base station NodeB at the time of determining the SG (the first scheduling grant), and the DPCCH SIR target for the SG.

In the first feature of the embodiment, the SIR target management unit 11 sets the DPCCH SIR target for each SG as a value between an upper limit value and a lower limit value of the DPCCH SIR target. If the lower limit value of the DPCCH SIR target for a specific SG is larger than the DPCCH SIR target for the "Zero Grant", the scheduling unit 14 may use the upper limit value of the DPCCH SIR target for the specific SG as the DPCCH SIR target for the specific SG. If the lower limit value of the DPCCH SIR target for a specific AG is smaller than the DPCCH SIR target for the "Zero Grant", the scheduling unit 14 may use the lower limit value of the DPCCH SIR target for the specific SG as the DPCCH SIR target for the specific SG.

Note that the above described operations of the radio base station NodeB and the mobile station UE may be implemented by hardware, may be implemented by a software module executed by a processor, or may be implemented by a combination of both.

The software module may be provided in any type of storage medium such as a RAM (Random Access Memory), a flash memory, a ROM (Read Only Memory), an EPROM (Erasable Programmable ROM), an EEPROM (Electronically Erasable and Programmable ROM), a register, a hard disk drive, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the radio base station NodeB and the mobile station UE. Also,, the storage medium and the processor may be provided in the radio base station NodeB and the mobile station UE as a discrete component.

Hereinabove, the present invention has been described in detail using the above embodiment; however, it is apparent to those skilled in the art that the present invention is not limited to the embodiment described herein- Modifications and variations of the present invention can be made without departing from the scope of the present invention defined by the description of the scope of claims. Thus, what is described herein is for illustrative purpose, and has no intention whatsoever to limit the present invention.

Note that the entire content of Japanese Patent Application No. 2009-145267 (filed on June 18, 2009) is incorporated herein by reference.

INDUSTRIAL APPLICABILITY

As described above, the radio base station according to the invention can notify a proper scheduling grant to a mobile station UE to be scheduled in the next scheduling allocation slot at the time of switching between mobile stations UE to be scheduled in the EUL communication in the "Time and Rate" system.

EXPLANATION OF REFERENCE NUMERALS

NodeB Radio base station

11   SIR TARGET management unit
12   DPCCH transmission power control unit
13   Calculation unit
14   Scheduling unit
15   Scheduling grant transmission unit

**Claims**

1.  A radio base station, comprising:

    a scheduling unit configured to determine one mobile station as a mobile station scheduled in each scheduling slot, and determine a scheduling grant to be notified to the scheduled mobile station ;
    a scheduling grant transmission unit configured to transmit a first scheduling grant determined by the scheduling unit to a first mobile station scheduled in a next scheduling slot and transmit a second scheduling grant making an instruction to stop transmission of uplink data in the next scheduling slot to a second mobile station scheduled in a current scheduling slot, at the time of switching between scheduled mobile stations;
    a target reception quality management unit configured to manage a target reception quality in a dedicated physical control channel for each scheduling grant; and
    a calculation unit configured to calculate a required reception quality in the dedicated physical control channel, which is required to satisfy the target reception quality in the dedicated physical control channel for each scheduling grant, wherein
    the scheduling unit is configured to determine the first scheduling grant based on maximum allowable reception power in the radio base station at a time of determining the first scheduling grant, and based on the required reception quality in the dedicated physical control channel for each scheduling grant.

2.  The radio base station according to claim 1, wherein the calculation unit is configured to calculate the required reception quality in the dedicated physical control channel for each scheduling grant based on interference power in the radio base station at the time of determining the first scheduling grant, and based on the target reception quality in the dedicated physical control channel for the scheduling grant.

3.  The radio base station according to claim 1 or 2, wherein the target reception quality management unit sets the target reception quality in the dedicated physical control channel for each scheduling grant as a value between an upper limit value and a lower limit value of the target reception quality, and
    if the lower limit value of the target reception quality in the dedicated physical control channel for a specific scheduling grant is larger than the target reception quality in the dedicated physical control channel for the second scheduling grant, the scheduling unit uses the upper limit value of the target reception quality in the dedicated physical control channel for the specific SG as the target reception quality in the dedicated physical control channel for the specific scheduling grant, and
    if the lower limit value of the target reception quality in the dedicated physical control channel for a specific scheduling grant is smaller than the target reception quality in the dedicated physical control channel for the second scheduling grant, the scheduling unit uses the lower limit value of the target reception quality in the dedicated physical control channel for the specific scheduling grant as the target reception quality in the dedicated physical control channel for the specific scheduling grant.

# FIG. 1

RADIO BASE
STATION
NodeB

E-AGCH
E-RGCH

E-DPDCH
E-DPCCH
DPCCH

MOBILE
STATION UE

# FIG. 2

SCHEDULING
GRANT
NOTIFICATION
UNIT

15

14

SCHEDULING
UNIT

RADIO BASE
STATION
NodeB

CALCULATION
UNIT

12

11

SIR TARGET
MANAGEMENT
UNIT

13

DPCCH
TRANSMISSION
POWER CONTROL
UNIT

# FIG. 3

| SG | DPCCH SIR TARGET |
|---|---|
| 1 | L1~H1 |
| 2 | L2~H2 |
| 3 | L3~H3 |
| ⋮ | ⋮ |

# FIG. 4

SIR TARGET#0 FOR "ZERO GRANT"

# FIG. 5

# FIG. 6

## FIG. 7

```
          START
            │
            ▼
       ┌─────────┐
  NO   │ WHETHER │  S101
 ◄─────│TO SWITCH BETWEEN│
       │MOBILE STATIONS TO│
       │BE SCHEDULED?│
       └─────────┘
            │ YES
            ▼
┌─────────────────────┐
│ CALCULATE RSSI IN DPCCH │ ─── S102
└─────────────────────┘
            │
            ▼
┌─────────────────────┐
│    DETERMINE SG     │ ─── S103
└─────────────────────┘
            │
            ▼
┌─────────────────────┐
│      NOTIFY SG      │ ─── S104
└─────────────────────┘
            │
            ▼
           END
```

## FIG. 8

ACHIEVED VALUE OF RSSI IN E-DPDCH

ESTIMATED VALUE OF RSSI IN E-DPDCH

MAXIMUM ALLOWABLE RECEPTION POWER OF E-DPDCH

REQUIRED RSSI IN DPCCH IN ACCORDANCE WITH "ZERO GRANT"

REQUIRED RSSI IN DPCCH IN ACCORDANCE WITH SG#1

FIG. 9

ESTIMATED VALUE OF RSSI IN E-DPDCH

MAXIMUM ALLOWABLE RECEPTION POWER OF E-DPDCH

REQUIRED RSSI IN DPCCH IN ACCORDANCE WITH "ZERO GRANT"

ACHIEVED VALUE OF RSSI IN E-DPDCH

REQUIRED RSSI IN DPCCH IN ACCORDANCE WITH SG#1

<table>
<tr><td colspan="2">**INTERNATIONAL SEARCH REPORT**</td><td>International application No.<br>PCT/JP2010/060340</td></tr>
</table>

**A. CLASSIFICATION OF SUBJECT MATTER**
*H04W72/12*(2009.01)i, *H04W52/08*(2009.01)i, *H04W72/14*(2009.01)i

According to International Patent Classification (IPC) or to both national classification and IPC

**B. FIELDS SEARCHED**

Minimum documentation searched (classification system followed by classification symbols)
H04W72/12, H04W52/08, H04W72/14

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Motorola, Lucent, Node B Controlled Time and Rate Scheduling, [online]. 3GPP TSG RAN WG1 #32 R1-030592, 2003.05, [retrieved on 2010-07-07]. Retrieved from the Internet:URL:http://ftp.3gpp.org/ftp/tsg_ran/WG1_RL1/TSGR1_32/Docs/Zips/R1-030592.zip> | 1-3 |
| A | Motorola, Time and Rate Control Scheduler for Enhanced Uplink, [online]. 3GPP TSG RAN WG1 #38 R1-040908, 2004.08, [retrieved on 2010-07-07]. Retrieved from the Internet:<URL:http://www.3gpp.org/ftp/tsg_ran/WG1_RL1/TSGR1_38/Docs/Zips/R1-040908.zip> | 1-3 |

| [X] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>07 July, 2010 (07.07.10) | Date of mailing of the international search report<br>20 July, 2010 (20.07.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/060340 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2008-541596 A  (Nokia Corp.),<br>20 November 2008 (20.11.2008),<br>paragraphs [0026] to [0059]<br>& US 2006/0268773 A1      & EP 1880483 A<br>& WO 2006/120540 A1      & KR 10-2008-0019221 A<br>& CN 101204021 A          & ZA 200710682 A<br>& MX 2007014058 A         & RU 2007145222 A | 1-3 |
| A | JP 2007-166295 A  (NEC Corp.),<br>28 June 2007 (28.06.2007),<br>paragraphs [0002] to [0004]<br>& US 2007/0135130 A1      & CN 1984431 A | 1-3 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009145267 A